# FASCICULE DE BREVET EUROPEEN

(11) **EP 1 523 843 B1**
(45) Date de publication et mention de la délivrance du brevet: **20.09.2006**
(21) Numéro de dépôt: 03771130.6
(22) Date de dépôt: 01.07.2003
(51) Int. Cl.: H04M 1/247, G06F 3/023

(54) **DISPOSITIF DE COMMUNICATION MOBILE**
MOBILKOMMUNIKATIONSGERÄT
MOBILE COMMUNICATION DEVICE

(30) Priorité: 22.07.2002 FR 0209290
(43) Date de publication de la demande: 20.04.2005
(73) Titulaire: FRANCE TELECOM, 75015 Paris (FR)
(72) Inventeur: VACQUIE, Luc, F-31380 Saint Jean l'Herm (FR)
(74) Mandataire: Habasque, Etienne J. Jean-François
(86) Numéro de dépôt international: PCT/FR2003/002042
(87) Numéro de publication internationale: WO 2004/012427

(56) Documents cités:
- EP-A- 1 104 151
- WO-A-01/61443
- US-A- 5 715 416
- US-A1- 2001 056 364

## Description

La présente invention concerne un dispositif de télécommunication mobile du type comportant au moins un émetteur/récepteur d'informations, un écran de visualisation d'informations, une interface de commande par un utilisateur, un processeur de traitement et des moyens logiciels d'exécution d'une pluralité de fonctions intégrées dans le dispositif par ledit processeur.

De tels dispositifs sont courants et disposent d'un nombre croissant de fonctions telles que des fonctions de répertoires, d'échanges d'informations, d'accès à des données d'images et de sons, d'accès à des réseaux de transfert d'informations tel que l'Internet, ainsi qu'un nombre important de fonctions de réglage et de personnalisation.

En outre, de tels dispositifs permettent couramment la réception d'informations de diverses natures telles que des appels téléphoniques, des appels de télécopie, des messages courts écrits et des messages électroniques.

L'accroissement des capacités des dispositifs de télécommunication entraîne également l'accroissement de la complexité des interfaces homme/machine qui sont le plus souvent constituées de cascades de menus de fonctions rendant ainsi l'utilisation de tels dispositifs peu conviviale.

Le document WO-A-01 61 443 décrit un tel dispositif dont l'interface est fondée sur des successions d'icônes différentes.

Le but de l'invention est de résoudre ce problème en proposant un dispositif de télécommunication mobile permettant la gestion de fonctions intégrées de manière conviviale.

La présente invention à pour objet un dispositif de télécommunication mobile du type comportant au moins un émetteur/récepteur d'informations, un écran de visualisation d'informations, une interface de commande par un utilisateur, un processeur de traitement et des moyens logiciels d'exécution par ledit processeur, d'une pluralité de fonctions intégrées dans le dispositif, caractérisé en ce qu'il comporte en outre des moyens de surveillance et d'analyse des informations reçues par ledit au moins un récepteur et des moyens de génération d'au moins un pictogramme à attributs modifiables au moins sous le contrôle desdits moyens de surveillance et d'analyse pour notifier à l'utilisateur la réception d'informations, lequel pictogramme est affichable sur ledit écran de visualisation pour former une interface homme/machine et comporte en outre des zones d'activation de fonctions intégrées dans ledit dispositif accessibles par l'utilisateur au travers de ladite interface de commande du dispositif pour permettre l'activation des fonctions correspondantes.

Selon d'autres caractéristiques de l'invention:
- Le dispositif comporte également des moyens de surveillance de l'état de fonctionnement du dispositif et en ce que lesdits moyens de génération du pictogramme à attributs modifiables sont également sous le contrôle desdits moyens de surveillance de l'état du dispositif pour notifier à l'utilisateur l'état de fonctionnement du dispositif ;
- il comporte en outre, des moyens de paramétrage du pictogramme et en ce que lesdits moyens de génération du pictogramme à attributs modifiables sont également sous le contrôle desdits moyens de paramétrage pour générer un pictogramme en fonction des moyens de paramétrage ;
- lesdits moyens de paramétrage sont adaptés pour délivrer auxdits moyens de génération des pictogrammes des instructions afin de créer et/ou modifier des zones d'activation dudit pictogramme à attributs modifiables ;
- au moins une desdites zones d'activation correspond à des parties dudit pictogramme dont l'activation entraîne l'affichage de celle-ci à échelle agrandie autorisant ainsi l'accès par l'utilisateur à une pluralité d'autres zones d'activation rattachées ;
- le dispositif comporte une mémoire de pictogrammes associée auxdits moyens de génération du pictogramme et en ce que l'activation de certaines zones d'activation d'un premier pictogramme entraîne l'affichage d'un autre pictogramme généré par lesdits moyens de génération de pictogrammes à attributs modifiables à partir de pictogrammes contenus dans cette mémoire ;
- il comporte une autre interface homme/machine permettant d'accéder à l'ensemble des fonctions intégrées dans le dispositif et en ce que ledit pictogramme comporte une zone d'activation permettant la mise en service de cette autre interface homme/machine ;
- il comporte un séquenceur adapté pour permettre la mise en oeuvre desdits moyens de génération du pictogramme ou l'affichage sur ledit écran de visualisation d'un pictogramme de veille après un temps prédéterminé d'inactivité du dispositif ;
- ledit pictogramme est un pictogramme anthropomorphe ;
- il comporte au moins l'une des zones d'activation parmi le groupe constitué de :

- une zone d'activation de fonctions de type répertoire au niveau du cerveau dudit pictogramme anthropomorphe ;
- une zone d'activation de fonctions sonores au niveau d'une oreille dudit pictogramme anthropomorphe ;
- une zone d'activation de fonctions visuelles au niveau d'un oeil dudit pictogramme anthropomorphe ;
- une zone d'activation de fonctions de personnalisation au niveau du coeur dudit pictogramme anthropomorphe ; et
- une zone d'activation de fonctions relatives à des messages écrits courts au niveau d'une main dudit pictogramme anthropomorphe.

L'invention sera mieux comprise à la lecture de la description qui va suivre, donnée uniquement à titre d'exemple et faite en se référant aux dessins annexés sur lesquels :
- la figure 1 représente un exemple de réalisation d'un dispositif de télécommunication mobile ;
- la figure 2 représente un schéma fonctionnel d'un appareil de télécommunication mobile selon l'invention ; et
- les figures 3, 4 et 5 représentent différents niveaux de détail de l'écran du dispositif décrit en référence à la figure 2.

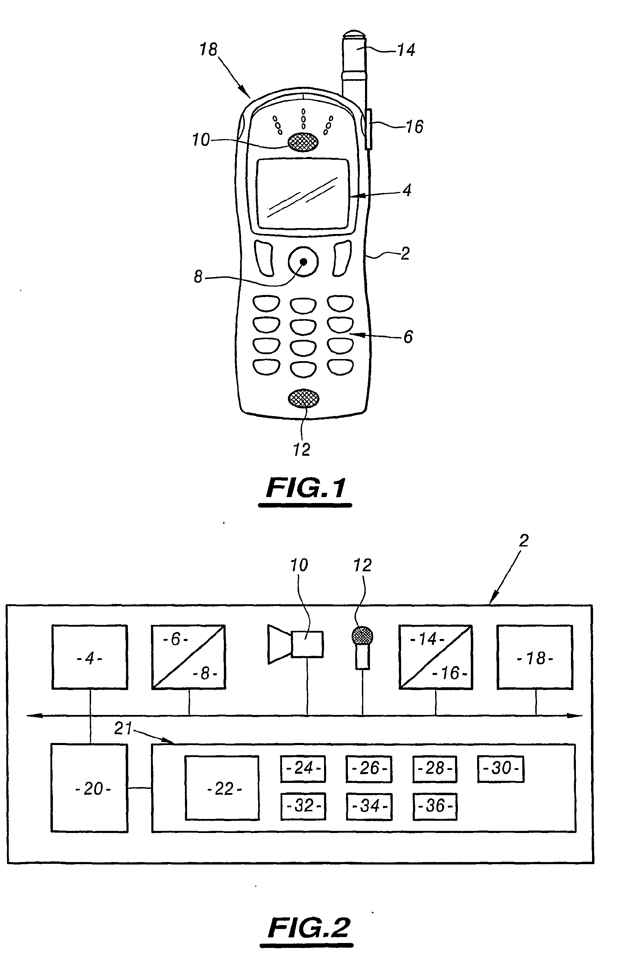

La figure 1 représente un dispositif de télécommunication mobile et plus précisément un téléphone mobile 2.

Celui-ci comprend un écran d'affichage 4, et une interface de commande formée par exemple d'un clavier 6 et d'un bouton multidirectionnel 8.

Le téléphone mobile 2 comprend également un haut-parleur 10, un microphone 12 ainsi que des moyens d'émission et de réception d'informations formés par exemple d'une antenne 14 pour la communication par ondes radio sans fil et d'une interface infrarouge 16, et une batterie d'alimentation rechargeable 18.

En référence à la figure 2, on a représenté un schéma fonctionnel du dispositif de télécommunication décrit en référence à la figure 1, équipé selon l'invention.

On reconnaît dans ce schéma du téléphone mobile 2, l'écran de visualisation 4, l'interface de commande 6 et 8, le haut-parleur 10, le microphone 12, les moyens d'émission et de réception d'informations 14 et 16 et la batterie 18.

Tous ces éléments sont reliés entre eux et sont adaptés pour être pilotés par un processeur de traitement 20, lequel est associé à une mémoire 21 qui comporte des moyens logiciels 22 d'exécution d'une pluralité de fonctions.

De manière classique, les moyens logiciels 22 sont désignés par l'expression « système d'exploitation » et sont adaptés pour mettre en oeuvre toutes les fonctionnalités du téléphone mobile 2.

Selon l'invention, le téléphone mobile 2 comporte également des moyens 24 de génération d'un pictogramme à attributs modifiables, lequel pictogramme est affichable sur ledit écran de visualisation 4 pour former une interface homme/machine.

Les moyens 24 de génération d'un pictogramme sont reliés à des moyens 26 de surveillance et d'analyse des informations reçues par les moyens 14 et 16 de réception d'informations, ainsi qu'à des moyens 28 de surveillance de l'état de fonctionnement du téléphone mobile 2, à des moyens 30 de paramétrage de l'affichage du pictogramme, et à une mémoire 32 de pictogrammes, afin de recevoir de ces différents éléments des informations permettant de modifier des attributs du pictogramme à générer.

Ainsi, les moyens 24 de génération de pictogramme génèrent un pictogramme sélectionné dans la mémoire 32 et dont les attributs sont modifiés en fonction des informations délivrées par les moyens 26 de surveillance et d'analyse des informations reçues et par les moyens 28 de surveillance de l'état de fonctionnement du téléphone 2 ainsi qu'en fonction des instructions délivrées par les moyens 30 de paramétrage.

Selon l'invention, le pictogramme généré par les moyens 24 comporte en outre des zones d'activation des fonctions intégrées dans le téléphone 2.

Ces zones d'activation sont surveillées par des moyens 34 de surveillance et sont accessibles par un utilisateur du téléphone 2 au travers de l'interface de commande 6, 8 pour permettre l'activation de fonctions du système d'exploitation 22 ainsi que cela est décrit plus en détails ultérieurement.

Le dispositif comporte enfin un séquenceur 36 adapté pour déclencher la mise en oeuvre des moyens 24 de génération d'un pictogramme en fonction du temps et des actions réalisées par un utilisateur sur l'interface de commande 6,8.

Les moyens 24, 26 28, 30, 34 et 36 sont, par exemple, des moyens logiciels réalisés en code informatique dit « JAVA » et tous ou une partie de ceux-ci peuvent être intégrés dans la mémoire 21 d'origine du téléphone 2 ou être téléchargés dans celle-ci au cours de l'utilisation du téléphone 2.

De même, la mémoire de pictogrammes 32 peut être intégrée dans la mémoire 21 d'origine ou encore être créée et/ou complétée au cours de l'utilisation du téléphone 2.

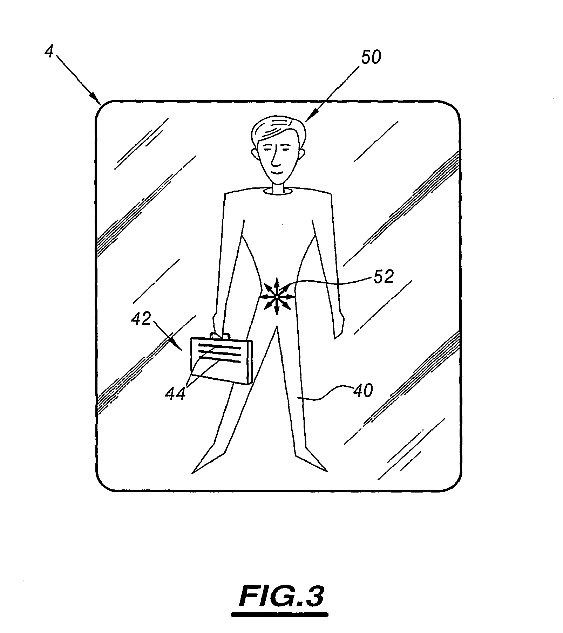

La figure 3 représente un exemple de mise en oeuvre du dispositif selon l'invention tel que décrit en référence aux figures 1 et 2 et plus particulièrement la figure 3 représente l'écran de visualisation 4 du téléphone 2 sur lequel est affiché un pictogramme anthropomorphe 40.

Par exemple, ce pictogramme 40 est affiché par défaut sous contrôle du séquenceur 36 après une période de temps prédéterminée durant laquelle l'interface de commande 6, 8 est inactive et forme ainsi un pictogramme de veille.

Le pictogramme 40 étant généré par les moyens 24 sous contrôle des moyens 28 de surveillance de l'état de fonctionnement du téléphone 2, il en est représentatif.

Par exemple, les moyens 28 de surveillance de l'état de fonctionnement du téléphone 2 vérifient l'état de charge de la batterie 18 et fournissent des informations correspondantes aux moyens 24 de génération du pictogramme 40 de sorte que la brillance et/ou la couleur du pictogramme 40 indiquent l'état de charge de la batterie 18.

De même, un symbole disposé au niveau des oreilles du pictogramme 40 renseigne un utilisateur sur l'état des fonctions de sonnerie du téléphone 2. Par exemple, une oreille barrée indique que la sonnerie du téléphone 2 est désactivée.

Le pictogramme 40 est également généré sous contrôle des moyens 26 de surveillance et d'analyse des informations reçues de manière à notifier l'utilisateur de la réception d'informations.

Par exemple, le téléphone 2 reçoit trois nouveaux messages écrits tels que des messages écrits courts dits « SMS ». La réception des ces messages est détectée par les moyens 26 de surveillance et d'analyse qui fournissent des informations correspondantes aux moyens 24 de génération du pictogramme 40 de sorte que celui-ci comporte une valise 42 sur laquelle trois rayures horizontales 44 renseignent sur le nombre de nouveaux messages SMS.

Le pictogramme 40 généré par les moyens 24 est ainsi représentatif de l'état de fonctionnement du téléphone 2 ainsi que des informations reçues de manière à en notifier un utilisateur.

Par ailleurs, le pictogramme 40 comporte une pluralité de zones d'activation telles que la valise 42 ou encore le visage 50, accessibles pour un utilisateur au travers de la commande d'un curseur 52 présenté sur l'écran d'affichage 4 et associé au bouton multidirectionnel 8 de l'interface de commande du téléphone.

Dans l'exemple décrit, le curseur 52 est initialement situé au niveau de l'abdomen du pictogramme 40 et peut être dirigé dans huit directions cardinales par un utilisateur à l'aide du bouton multidirectionnel 8.

D'une façon générale, les fonctions relatives aux messages SMS sont situées au niveau de la main du pictogramme 40 et plus précisément de la valise 42.

L'utilisateur peut donc activer la zone d'activation 42 correspondant à la valise simplement en déplaçant le curseur 52 dans sa direction ou encore en le positionnant dessus et en validant cette position à l'aide, par exemple d'une touche du clavier 6.

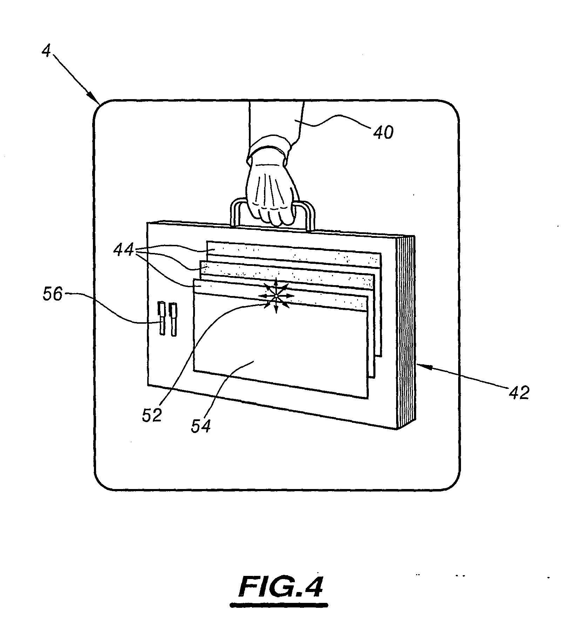

Ceci se traduit par l'affichage sur l'écran 4 à échelle agrandie de la valise 42 du pictogramme 40 ainsi que cela est représenté en référence à la figure 4.

Sur cet affichage à échelle agrandie, les lignes horizontales 44 sont chacune un onglet d'une feuille comportant par exemple l'identifiant de l'émetteur du message écrit, les feuilles elles-mêmes, désignées par la référence numérique 54, comportant le corps des messages.

L'affichage agrandi de la valise 42 entraîne également l'affichage de nouvelles zones d'activation rattachées telles qu'une zone d'activation correspondant à des stylos 56 et représentant une zone d'activation de fonctions d'écriture de messages SMS.

L'utilisateur a alors la possibilité en déplaçant le curseur 52 d'accéder aux nouveaux messages SMS reçus ou encore d'entamer la rédaction d'un message à envoyer.

Par exemple, lorsque l'utilisateur déplace le curseur 52 vers la droite, les feuilles 54 s'intervertissent afin de permettre la lecture de tous les nouveaux messages.

En outre, si l'utilisateur déplace le curseur 52 vers le stylo 56 ou positionne le curseur 52 dessus et valide cette position, la zone d'activation 56 réagit de manière similaire à un icône en entraînant l'exécution, par le système d'exploitation 22, de la fonction d'écriture de messages.

Bien entendu, la symbolique de la valise 42 peut également être utilisée pour indiquer la réception de messages de télécopie, de messages électroniques, d'appels en absence ou toute autre caractéristique relative à la réception d'informations.

En déplaçant le curseur 52 vers la main du pictogramme 40 et donc en direction de la position centrale correspondant à l'abdomen, l'utilisateur peut revenir au niveau de l'affichage à échelle normale tel que représenté en référence à la figure 3.

Bien entendu, si l'utilisateur a pris connaissance des nouveaux messages SMS, le pictogramme généré par les moyens 24 ne comporte plus alors les bandes horizontales 44 sur la valise 42 indiquant ainsi l'absence de nouveaux messages écrits.

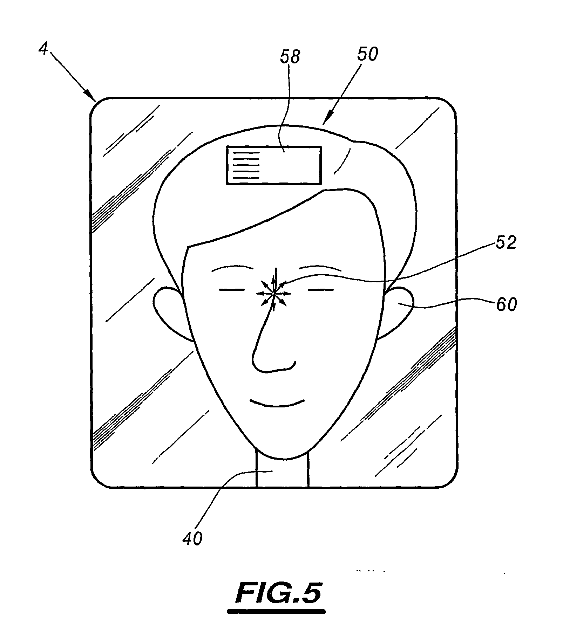

A partir de la position centrale du curseur 52 au niveau de l'abdomen du pictogramme 40 telle que représentée en référence à la figure 3, ou encore directement à partir de l'affichage à échelle agrandie de la valise 42 tel que représenté à la figure 4, l'utilisateur peut déplacer le curseur vers la zone d'activation correspondant au visage 50. L'activation de cette zone 50 entraîne son affichage à échelle agrandie ainsi que cela est représenté en référence à la figure 5.

L'utilisateur a alors la possibilité de déplacer le curseur 52 entre diverses nouvelles zones d'activation rattachées réparties sur le visage 50 du pictogramme 40 affiché en gros plan, afin d'accéder à certaines fonctions du téléphone 2.

Par exemple, le déplacement du curseur 52 vers la zone d'activation 58 correspondant au cerveau permet l'activation des fonctions relatives aux répertoires du téléphone 2 et notamment à la mémorisation de contacts. De même le déplacement du curseur 52 vers l'oreille 60 permet l'activation de fonctions relatives aux caractéristiques sonores du téléphone 2 et notamment l'activation et la désactivation de sa sonnerie.

Bien entendu, d'autres exemples et configurations peuvent être envisagés.

Par exemple, une zone d'activation de fonctions visuelles est prévue au niveau d'un oeil du pictogramme 40, une zone d'activation de fonction de personnalisation est prévue au niveau du coeur, etc...

Dans le cas où une même partie du pictogramme 40 est utilisée en tant que zone d'activation ainsi que pour notifier à l'utilisateur la réception d'informations ou l'état de fonctionnement du dispositif 2, celui-ci est adapté pour commuter entre ces deux fonctions.

Par exemple, une partie du clavier 6 de l'interface de commande du dispositif permet de commuter entre deux modes de fonctionnement. Dans l'un de ces modes de fonctionnement, les zones d'activation sont accessibles et sont affichées en surbrillance par rapport aux informations notifiées à l'utilisateur et inversement dans l'autre mode de fonctionnement.

Ainsi, par exemple, les vêtements du buste du pictogramme sont utilisés pour notifier à l'utilisateur la réception de messages électroniques et le coeur du pictogramme 40 est une zone d'activation permettent l'accès à des fichiers personnels. L'interface de commande permet alors de commuter entre les deux modes de fonctionnement, l'un permettant l'accès aux messages électroniques et l'autre permettant l'accès à la zone d'activation du coeur.
la répartition des zones d'activation permet à l'utilisateur d'appréhender le fonctionnement du dispositif 2 de manière intuitive, notamment du fait de l'utilisation d'un pictogramme anthropomorphe et de la répartition des zones d'activation sur le pictogramme 40 de manière à ce que les fonctions correspondantes soient en relation avec la position de la zone sur le pictogramme 40.

De ce fait, lorsque le dispositif affiche une partie du pictogramme à échelle agrandie, l'utilisateur n'est pas contraint de revenir au niveau de l'affichage à échelle normale tel que représenté à la figure 3 pour accéder à l'affichage à échelle agrandie d'une autre partie du pictogramme, mais peut y accéder directement en déplaçant le curseur 52 dans la direction appropriée, ce qui accroît encore la convivialité de ce dispositif.

Par ailleurs, un utilisateur a la possibilité, grâce aux moyens de paramétrage 30, d'introduire un certain nombre de modifications sur le pictogramme 40.

Les moyens 30 de paramétrage délivrent pour cela des instructions d'affichage aux moyens 24 de génération d'un pictogramme 40 de sorte que celui-ci répond aux paramètres saisis par un utilisateur.

Ces modifications peuvent être, par exemple, le déplacement d'une zone d'activation sur une partie sélectionnée du pictogramme 40 ou encore correspondre à la création d'une nouvelle zone d'activation.

Dans un souci de simplicité, le pictogramme 40 ne permet pas l'accès à l'ensemble des fonctions exécutables par le système d'exploitation 22 de sorte qu'il convient de prévoir un moyen d'accéder à celles-ci, par exemple en réactivant une autre interface homme/machine classique constituée de menus déroulant.

Cette réactivation peut se faire par exemple en déplaçant le curseur 52 sur une zone d'activation particulière du pictogramme 40 ou encore par la manipulation de l'interface de commande en maintenant une touche du clavier 6 enfoncée pendant un temps prédéterminé.

En outre, d'autre interfaces de commande que celles décrites peuvent être utilisées, telles qu'une commande vocale, un molette ou un écran tactile ou toute autre interface adaptée.

Par ailleurs, il peut être fait usage d'une pluralité de pictogrammes correspondants tous ou en partie à des pictogrammes anthropomorphes pour permettre l'accès aux différentes fonctions du dispositif 2, l'activation d'une zone d'activation entraînant l'affichage d'un nouveau pictogramme.

Dans un autre mode de réalisation, une partie de l'interface de commande est dédiée à la gestion de l'échelle de l'affichage de manière à permettre un affichage avec un niveau de détail variable, et une autre partie de l'interface de commande est utilisée pour se déplacer entre les zones d'activation et les données affichées en fonction de l'échelle d'affichage.

L'invention décrite peut également être adaptée à d'autres types de dispositifs tels que des assistants téléphoniques personnels couramment désignés « PDA » ou encore à tout autre dispositif mobile adapté pour recevoir des informations et intégrant une pluralité de fonctions.

Il apparaît donc que l'invention permet de synthétiser simplement des caractéristiques relatives à la réception d'informations ainsi qu'à l'état de fonctionnement du dispositif et permet également un accès rapide et convivial aux fonctions qu'il intègre.

## Revendications

1. Dispositif de télécommunication mobile (2) du type comportant au moins un émetteur/récepteur d'informations (14,16), un écran de visualisation d'informations (4), une interface de commande (6,8) par un utilisateur, un processeur de traitement (20) et des moyens logiciels (22) d'exécution par ledit processeur (20), d'une pluralité de fonctions intégrées dans le dispositif (2), **caractérisé en ce qu'**il comporte en outre des moyens (26) de surveillance et d'analyse des informations reçues par ledit au moins un récepteur (14,16) et des moyens (24) de génération d'au moins un pictogramme (40) à attributs modifiables au moins sous le contrôle desdits moyens (26) de surveillance et d'analyse pour notifier à l'utilisateur la réception d'informations, lequel pictogramme (40) est affichable sur ledit écran de visualisation (4) pour former une interface homme/machine et comporte en outre des zones (42, 50) d'activation de fonctions intégrées dans ledit dispositif (2) accessibles par l'utilisateur au travers de ladite interface de commande (6,8) du dispositif (2) pour permettre l'activation des fonctions correspondantes.

2. Dispositif selon la revendication 1, **caractérisé en ce qu'**il comporte également des moyens (28) de surveillance de l'état de fonctionnement du dispositif (2) et **en ce que** lesdits moyens (24) de génération du pictogramme (40) à attributs modifiables sont également sous le contrôle desdits moyens (28) de surveillance de l'état du dispositif (2) pour notifier à l'utilisateur l'état de fonctionnement du dispositif (2).

3. Dispositif selon l'une quelconque des revendications 1 ou 2, **caractérisé en ce qu'**il comporte en outre, des moyens (30) de paramétrage du pictogramme (40) et **en ce que** lesdits moyens (24) de génération du pictogramme (40) à attributs modifiables sont également sous le contrôle desdits moyens (30) de paramétrage pour générer un pictogramme (40) en fonction des moyens (20) de paramétrage.

4. Dispositif selon la revendication 3, **caractérisé en ce que** lesdits moyens (30) de paramétrage sont adaptés pour délivrer auxdits moyens (24) de génération des pictogrammes des instructions afin de créer et/ou modifier des zones d'activation dudit pictogramme (40) à attributs modifiables.

5. Dispositif selon l'une quelconque des revendications 1 à 4, **caractérisé en ce que** au moins une desdites zones d'activation (42, 50) correspond à des parties dudit pictogramme (40) dont l'activation entraîne l'affichage de celle-ci à une échelle agrandie autorisant ainsi l'accès par l'utilisateur à une pluralité d'autres zones d'activation rattachées (56, 58, 60).

6. Dispositif selon l'une quelconque des revendications 1 à 5, **caractérisé en ce qu'**il comporte une mémoire (32) de pictogrammes associée auxdits moyens (24) de génération du pictogramme et **en ce que** l'activation de certaines zones d'activation d'un premier pictogramme (40) entraîne l'affichage d'un autre pictogramme généré par lesdits moyens (24) de génération de pictogrammes à attributs modifiables à partir de pictogrammes contenus dans cette mémoire (32).

7. Dispositif selon l'une quelconque des revendications 1 à 6, **caractérisé en ce qu'**il comporte une autre interface homme/machine permettant d'accéder à l'ensemble des fonctions intégrées dans le dispositif (2) et **en ce que** ledit pictogramme (40) comporte une zone d'activation permettant la mise en service de cette autre interface homme/machine.

8. Dispositif selon la revendication 7; **caractérisé en ce qu'**il comporte un séquenceur (36) adapté pour permettre la mise en oeuvre desdits moyens (24) de génération du pictogramme (40) ou l'affichage sur ledit écran de visualisation (4) d'un pictogramme de veille après un temps prédéterminé d'inactivité du dispositif (2).

9. Dispositif selon l'une quelconque des revendications 1 à 8, **caractérisé en ce que** ledit pictogramme est un pictogramme anthropomorphe.

10. Dispositif selon la revendication 9, **caractérisé en ce qu'**il comporte au moins l'une des zones d'activation parmi le groupe constitué de :
- une zone d'activation de fonctions de type répertoire au niveau du cerveau dudit pictogramme anthropomorphe (40) ;
- une zone d'activation de fonctions sonores au niveau d'une oreille dudit pictogramme anthropomorphe (40) ;
- une zone d'activation de fonctions visuelles au niveau d'un oeil dudit pictogramme anthropomorphe (40) ;
- une zone d'activation de fonctions de personnalisation au niveau du coeur dudit pictogramme anthropomorphe (40) ; et
- une zone d'activation de fonctions relatives à des messages écrits courts au niveau d'une main dudit pictogramme anthropomorphe (40).

## Claims

1. Mobile telecommunication device (2) of the type comprising at least one information transmitter/receiver (14, 16), an information display screen (4), an interface for control (6, 8) by a user, a processor (20) and software means (22) of execution by the said processor (20), of a plurality of functions integrated in the device (2), **characterized in that** it furthermore comprises means (26) of monitoring and of analysis of the information received by the said at least one receiver (14, 16) and means (24) of generation of at least one pictogram (40) with attributes modifiable at least under the control of the said means (26) of monitoring and of analysis so as to notify the user of the receipt of the information, which pictogram (40) is displayable on the said display screen (4) so as to form a man/machine interface and furthermore comprises zones (42, 50) of activation of functions integrated in the said device (2) and which are accessible to the user through the said control interface (6, 8) of the device (2) so as to allow the activation of the corresponding functions.

2. Device according to Claim 1, **characterized in that** it also comprises means (28) of monitoring of the state of operation of the device (2) and **in that** the said means (24) of generation of the pictogram (40) with modifiable attributes are also under the control of the said means (28) of monitoring of the state of the device (2) so as to notify the user of the state of operation of the device (2).

3. Device according to any one of Claims 1 or 2, **characterized in that** it furthermore comprises means (30) of parametrization of the pictogram (40) and **in that** the said means (24) of generation of the pictogram (40) with modifiable attributes are also under the control of the said means (30) of parametrization so as to generate a pictogram (40) as a function of the means (20) of parametrization.

4. Device according to Claim 3, **characterized in that** the said means (30) of parametrization are adapted to deliver to the said means (24) of generation of the pictograms instructions so as to create and/or modify zones of activation of the said pictogram (40) with modifiable attributes.

5. Device according to any one of Claims 1 to 4, **characterized in that** at least one of the said zones of activation (42, 50) corresponds to parts of the said pictogram (40) whose activation brings about the displaying of the latter on a magnified scale thus permitting access by the user to a plurality of other attached zones of activation (56, 58, 60).

6. Device according to any one of Claims 1 to 5, **characterized in that** it comprises a pictograms memory (32) associated with the said means (24) of generation of the pictogram and **in that** the activation of certain zones of activation of a first pictogram (40) brings about the displaying of another pictogram generated by the said means (24) of generation of pictograms with modifiable attributes on the basis of pictograms contained in this memory (32).

7. Device according to any one of Claims 1 to 6, **characterized in that** it comprises another man/machine interface allowing access to all the functions integrated in the device (2) and **in that** the said pictogram (40) comprises a zone of activation allowing the deployment of this other man/machine interface.

8. Device according to Claim 7, **characterized in that** it comprises a sequencer (36) adapted for allowing the implementation of the said means (24) of generation of the pictogram (40) or the displaying on the said display screen (4) of a standby pictogram after a predetermined time of inactivity of the device (2).

9. Device according to any one of Claims 1 to 8, **characterized in that** the said pictogram is an anthropomorphic pictogram.

10. Device according to Claim 9, **characterized in that** it comprises at least one of the zones of activation from among the group consisting of:
- a zone of activation of functions of directory type at the level of the brain of the said anthropomorphic pictogram (40);
- a zone of activation of sound functions at the level of an ear of the said anthropomorphic pictogram (40);
- a zone of activation of visual functions at the level of an eye of the said anthropomorphic pictogram (40);
- a zone of activation of personalization functions at the level of the heart of the said anthropomorphic pictogram (40); and
- a zone of activation of functions relating to short written messages at the level of a hand of the said anthropomorphic pictogram (40).

## Patentansprüche

1. Mobiltelemkommunikationsgerät (2) mit mindestens einem Sender/Empfänger (14, 16) für Informationen, einem Anzeigeschirm (4), einer Befehlsschnittstelle (6, 8) für einen Benutzer, einem Prozessor (20) und logischen Mitteln (22) für die Ausführung mehrerer in das Gerät (2) integrierter Funktionen durch den genannten Prozessor (20), **dadurch gekennzeichnet, daß** es außerdem Mittel (26) zur Überwachung und Analyse von Informationen aufweist, die durch den genannten wenigstens einen Empfänger (14. 16) empfangen werden, sowie Mittel (24) zur Erzeugung wenigstens eines Piktogramms (40) mit Attributen, die zumindest unter der Steuerung durch die genannten Überwachungs- und Analysemittel (26) modifizierbar sind, um dem Benutzer den Empfang von Informationen anzuzeigen, welches Piktogramm (40) auf dem genannten Anzeigeschirm (4) darstellbar ist, um eine Mensch/Maschine-Schnittstelle zu bilden, und außerdem Zonen (42, 50) zur Aktivierung von Funktionen aufweist, die in das genannte Gerät (2) integriert sind und durch den Benutzer über die genannte Befehlaschnittstelle (6, 8) des Gerätes (2) zugänglich sind, um die Aktivierung der entsprechenden Funktionen zu ermöglichen.

2. Gerät nach Anspruch 1, **dadurch gekennzeichnet, daß** es außerdem Mittel (28) zur Überwachung des Betriebszustands des Gerätes (2) aufweist, und daß die genannten Mittel (24) zur Erzeugung des Piktogramms (40) mit modifizierbaren Attributen auch der Steuerung durch die genannten Mittel (28) zur Überwachung des Betriebszustands des Gerätes (2) unterliegen, um dem Benutzer den Betriebszustand des Gerätes (2) anzuzeigen.

3. Gerät nach Anspruch 1 oder 2, **dadurch gekennzeichnet, daß** es außerdem Mittel (30) zur Parametrierung des Piktogramms (40) aufweist, und daß die genannten Mittel (24) zur Erzeugung des Piktogramms (40) mit modifizier - baren Attributen auch der Kontrolle durch die genannten Mittel (30) zur Parametrierung unterliegen, um ein Piktogramm (40) in Abhängigkeit von den Parametrierungsmitteln (20) zu erzeugen.

4. Gerät nach Anspruch 3, **dadurch gekennzeichnet, daß** die genannten Parametrierungsmittel (30) dazu ausgebildet sind, an die genannten Mittel (24) zur Erzeugung von Piktogrammen Befehle zu übermitteln, um die Aktivierungszonen des genannten Piktogramms (40) mit modifizierbaren Attributen zu erzeugen und/oder zu modifizieren.

5. Gerät nach einem der Ansprüche 1 bis 4, **dadurch gekennzeichnet, daß** mindestens eine der genannten Aktivierungszonen (42, 50) Teilen des genannten Piktogramms (40) entspricht, deren Aktivierung die Anzeige derselben in einem vergrößerten Maßstab bewirkt, um so dem Benutzer Zugang zu mehreren anderen angeschlossenen Aktivierungszonen (56, 58, 60) zu geben.

6. Gerät nach einem der Ansprüche 1 bis 5, **dadurch gekennzeichnet, daß** es einen Piktogrammspeicher (32) aufweist, der den genannten Mitteln (24) zur Erzeugung des Piktogramms zugeordnet ist, und daß die Aktivierung bestimmter Aktivierungszonen eines ersten Piktogramms (40) die Anzeige eines anderen Piktogramms bewirkt, das von den genannten Mitteln (24) zur Erzeugung des Piktogramms mit modifizierbaren Attributen aus in diesem Speicher (32) enthaltenen Piktogrammen erzeugt wird.

7. Gerät nach einem der Ansprüche 1 bis 6, **dadurch gekennzeichnet, daß** es eine weitere Mensch/Maschine-Schnittstelle aufweist, die es erlaubt, auf die Gesamtheit der in das Gerät (2) integrierten Funktionen zuzugreifen, und daß das genannte Piktogramm (40) eine Aktivierungszone aufweist, die die Inbetriebnahme dieser weiteren Mensch/Maschine-Schnittstelle erlaubt.

8. Gerät nach Anspruch 7, **dadurch gekennzeichnet, daß** es einen Sequenzierer (36) aufweist, der dazu ausgebildet ist, die Inbetriebnahme der genannten Mittel (24) zur Erzeugung des Piktogramms (40) oder die Anzeige eines Bildschirmschoner-Piktogramms nach einer vorbestimmten Inaktivitätszeit des Gerätes (2) auf dem Anzeigeschirm (4) zu erlauben.

9. Gerät nach einem der Ansprüche 1 bis 8, **dadurch gekennzeichnet, daß** das genannte Piktogramm ein anthropomorphes Piktogramm ist.

10. Gerät nach Anspruch 9, **dadurch gekennzeichnet, daß** es wenigstens eine der Aktivierungszonen aus der Gruppe aufweist, die besteht aus:
- einer Aktivierungszone für Adreßbuch-Funktionen im Bereich des Kopfes des genannten anthropomorphen Piktogramms (40),
- einer Aktivierungszone für akustische Funktionen im Bereich eines Ohrs des genannten anthropomorphen Piktogramms (40).
- einer Aktivierungszone für visuelle Funktionen im Bereich eines Auges des genannten anthropomorphen Piktogramms (40),
- einer Aktivierungszone für Personalisierungsfünktionen im Bereich des Herzens des anthropomorphen Piktogramms (40) und
- einer Aktivierungszone für Funktionen, die sich auf geschriebene Kurznachrichten beziehen, im Bereich einer Hand des genannten anthropomorphen Piktogramms (40).
